# EUROPEAN PATENT APPLICATION

(11) **EP 2 717 128 A1**
(43) Date of publication of application: **09.04.2014**
(21) Application number: 12187174.3
(22) Date of filing: 04.10.2012
(51) Int. Cl.: G06F 3/041, G06F 3/038, G06F 3/0354, G06F 3/0488

(54) **Method and apparatus pertaining to predicting movement of a stylus**

(71) Applicant: BlackBerry Limited, Waterloo, ON N2K 0A7 (CA)
(72) Inventor: Singh, Amit Pal, Waterloo, Ontario N2L 3W8 (CA); Nandakumar, Rohan Michael, Waterloo, Ontario N2L 3W8 (CA)
(74) Representative: Bryn-Jacobsen, Caelia

(57) **Abstract**

An apparatus has both a stylus sensor and a hand sensor. A control circuit operably couples to both of these sensors and is configured to predict movement of the stylus as a function, at least in part, of the hand sensor. So configured, both present and historical information regarding the location of the user's hand can serve to further inform a prediction algorithm of choice to more reliably (and more quickly) predict a likely direction of movement for the stylus in order to provide a corresponding display of electronic ink that exhibits reduced (or eliminated) latency. By one approach the influence of the hand-location information can be statically or dynamically weighted to shade the influence of the hand-location information upon the prediction result.

## Description

### Field of Technology

The present disclosure relates to styli as used to provide user-based input via a corresponding scribing surface.

### Background

Various kinds of active scribing surfaces are known. Some scribing surfaces are particularly configured to work with a corresponding stylus. Generally speaking, a stylus is typically a hand-held writing utensil that often (but not exclusively) has a pencil-like elongated form factor and that includes at least one pointed end configured to serve as a writing tip and interact with a scribing surface. Using a stylus as an input mechanism with, for example, a display offers a variety of advantages over a fingertip including the opportunity for increased precision as well as an expression modality that accords with the user's own past experience with a pencil or pen.

In some cases the stylus comprises an active device that transmits a signal. This signal serves, for example, as a location beacon that the scribing surface device utilizes to confirm the proximity of the stylus and/or to facilitate accurate tracking of the stylus's movement with respect to the scribing surface.

Unfortunately, many prior art solutions exhibit unwanted and inconsistent latency with respect to displaying the movement of the stylus across a scribing surface. As a result, the electronic representation of a line that flows like ink on the scribing surface in response to movement of the stylus across the scribing surface can lag the actual location of the stylus tip by a noticeable amount. This latency, in turn, can feel unnatural to the user and can defeat or at least impair the user's effective use of the stylus as an input mechanism.

Some prior art solutions seek to utilize information regarding recent movement of the stylus as a basis for predicting where the stylus may next move. This prediction can then be leveraged to attempt to reduce latency by effectively anticipating stylus movement. Unfortunately, while sometimes such a prediction-based approach can indeed successfully anticipate the actual movement of the stylus, such is not assuredly the case. In some cases, for example, there exists the possibility that a line extended in a particular direction based upon what turns out to be a faulty prediction can be even further removed from the stylus's writing tip than would have occurred given the latency of a non-prediction approach. Such erratic behavior can be highly disconcerting and aggravating to many users.

### Brief Description of the Drawings

FIG. 1 is a flow diagram in accordance with the disclosure.

FIG. 2 is a block diagram in accordance with the disclosure.

FIG. 3 is a perspective view in accordance with the disclosure.

FIG. 4 is a top plan schematic view in accordance with the disclosure.

FIG. 5 is a top plan schematic view in accordance with the disclosure.

### Detailed Description

The following describes an apparatus and method pertaining to an apparatus having both a stylus sensor and a hand sensor. A control circuit that operably couples to both of these sensors is configured to predict movement of the stylus as a function, at least in part, of the hand sensor. So configured, both present and historical information regarding the location of the user's hand can serve to further inform a prediction algorithm of choice to more reliably (and more quickly) predict a likely direction of movement for the stylus in order to provide a corresponding display of electronic ink that exhibits reduced (or eliminated) latency. By one approach the influence of the hand-location information can be statically or dynamically weighted to shade the influence of the hand-location information upon the prediction result.

These teachings are highly flexible in practice and may be applied with either active or passive styli. These teachings are also highly scalable in practice and can be applied in conjunction with scribing surfaces having a wide variety of sizes.

So configured, hand-location information (as well as corresponding and related hand-tracking information) can be readily gleaned and automatically applied alone or in conjunction with a stylus-movement prediction approach of choice to improve the reliability of the prediction result and/or the cycle time by which the prediction result becomes available and applied.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

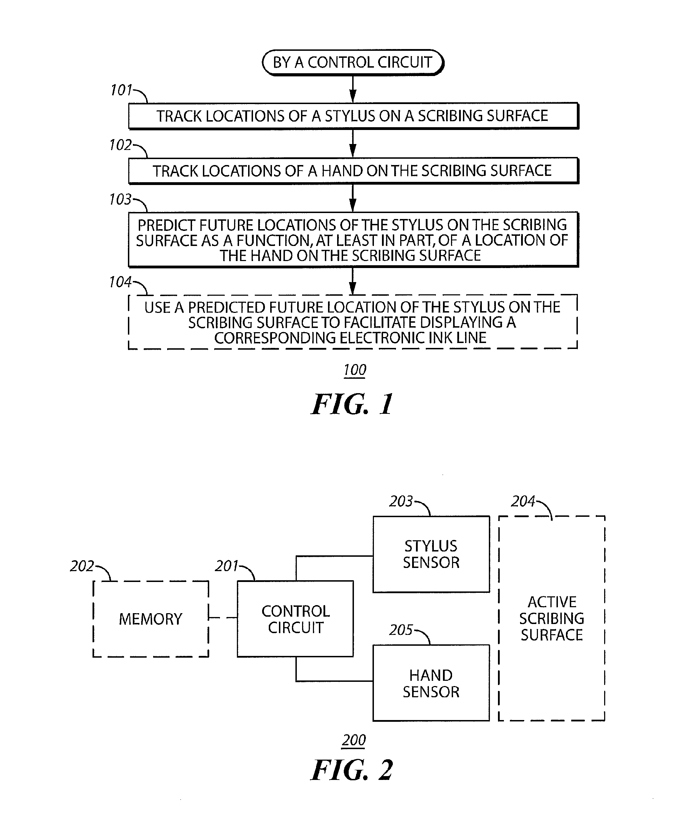

FIG. 1 presents a process 100 that comports with and illustrates many of these concepts. For the sake of this illustrative example it will be presumed that a control circuit of choice carries out this process 100. FIG. 2 offers one example of many in these regards. In particular, a given apparatus 200 (such as a smartphone having a larger touch-sensitive display or a tablet/pad-styled computer) can include a control circuit 201 that comprises, for example, a fixed-purpose hard-wired platform or, as another example, a partially or wholly-programmable platform. These architectural options are well known and understood in the art and require no further description here. This control circuit 201 is configured (for example, by using corresponding programming as will be well understood by those skilled in the art) to carry out one or more of the steps, actions, and/or functions described herein.

By one approach, this control circuit 201 can operably couple to a memory 202. The memory 202 may be integral to the control circuit 201 or can be physically discrete (in whole or in part) from the control circuit 201 as desired. This memory 202 can serve, for example, to non-transitorily store the computer instructions that, when executed by the control circuit 201, cause the control circuit 201 to behave as described herein. (As used herein, this reference to "non-transitorily" will be understood to refer to a non-ephemeral state for the stored contents (and hence excludes when the stored contents merely constitute signals or waves) rather than volatility of the storage media itself and hence includes both non-volatile memory (such as read-only memory (ROM) as well as volatile memory (such as an erasable programmable read-only memory (EPROM).)

This control circuit 201 couples, in this illustrative example, to a stylus sensor 203 that senses the location of at least a portion of a stylus (not shown) with respect to an active scribing surface 204. Various approaches in these regards are known in the art. Generally speaking, these teachings are not overly sensitive to any particular choices amongst these various approaches aside from being particularly appropriate for use with a stylus sensor 203 that is configured to actively interact with the stylus (for example, by receiving a signal (or signals) transmitted by the sensor to facilitate such location detection).

Also in this illustrative example the control circuit 201 operably couples to a hand sensor 205. This hand sensor 205 is configured to detect at least one portion of a user's hand (not shown) with respect to the aforementioned active scribing surface 204. By one approach, for example, the active scribing surface 204 can comprise, at least in part, a capacitive sensor-based touch-sensitive display. In such a case, the hand sensor 205 can comprise, at least in part, that ability to capacitively detect when, for example, the user's palm contacts the display while moving the stylus on that same display.

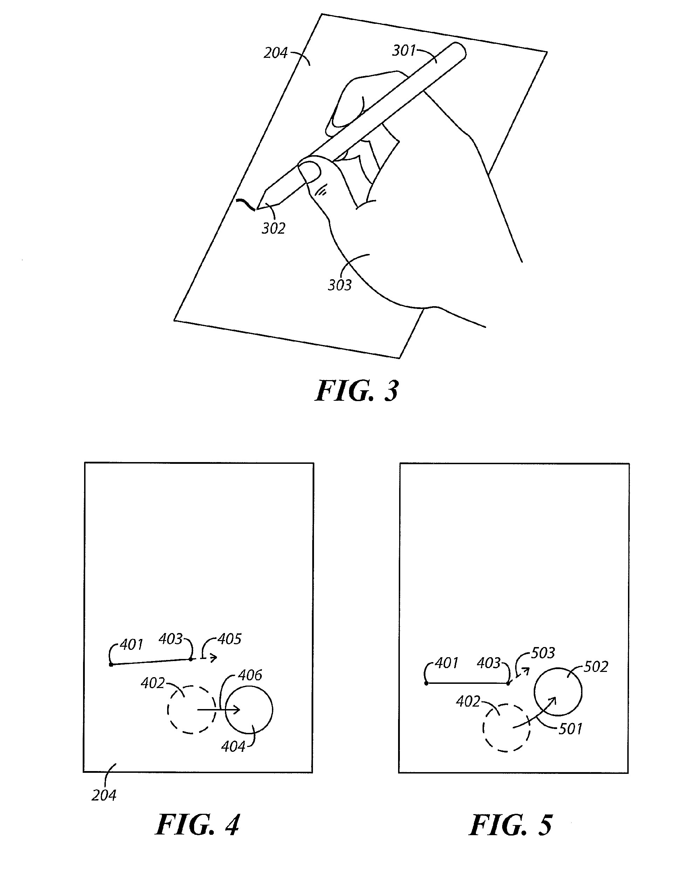

So configured, and referring momentarily to FIG. 3, the control circuit 201 receives (typically essentially in near real-time) information regarding, for example, a present location of a stylus's 301 writing tip 302 on the active scribing surface 204 as well as information regarding, for example, a location where the user's hand 303 (such as a portion of the hand's palm) also contacts the active scribing surface 204.

Referring again to FIG. 1, such a control circuit 201 utilizes the stylus sensor 203 to track 101 locations of the stylus 301 on the scribing surface 204. This can comprise, in particular, tracking locations of the stylus's writing tip 302 on that scribing surface 204. As used herein, the expression "tracking" will be understood to refer to maintaining at least a short recent history (such as, for example, information gathered over 0.5 seconds, 1.0 second, 2.0 seconds, or some other short duration of time as may be desired) of such locations. The number of location samples as are stored in this manner can vary with the application setting. Typical stylus-detection sample rates often equal or exceed 130 Hz (as compared, for example, to typical finger-detection sample rates which are often lower).

Similarly, this control circuit 201 utilizes the hand sensor 205 to track 102 locations of the user's hand 303 with respect to the scribing surface 204. By one approach the tracking window for the hand-tracking data can be similar or even identical to the tracking window employed when tracking stylus locations. If desired, however, tracking windows having different durations can be employed (as well as different sampling rates). As one illustrative example, and without intending any limitations in these regards, a lower sampling rate and longer tracking window may be used when tracking the user's hand 303 than when tracking the stylus 301.

Pursuant to this process 100 the control circuit 201 then predicts 103 future locations of the stylus 301 on the scribing surface 204 as a function, at least in part, of a location of the hand 303 on that scribing surface 204. FIG. 4 offers a simple illustrative example in these regards. In this example, the writing tip 302 of the stylus 301 began at a point on the scribing surface 204 denoted by reference numeral 401 and has moved along the indicated path to the present point denoted by reference numeral 403. The question for the control circuit 201 is, where will that writing tip 302 move next?

Various known prediction methodologies exist to attempt to answer that question based upon historical information regarding past locations of the writing tip 302. The present teachings will readily accommodate employing one or more of these known stylus-based prediction approaches when looking to predict the future movement of the stylus 301. In this simple example, where the stylus's recent path comprises a straight line, one might expect such a prediction to suggest that the stylus's path will continue in a straight line 405.

As noted above, these teachings look to also take into account information regarding the user's hand 303 when making such a prediction. In this illustrative example the user's palm began at the area denoted by reference numeral 402 and moved to the area denoted by reference numeral 404. A vector 406 that represents the corresponding path is closely parallel to the stylus's historical path. Accordingly, the control circuit 201 may use this information to confirm (at least to some increased degree) the prediction that the stylus's path will continue in a straight line 405.

This increased confidence, for example, may manifest itself by presenting a corresponding electronic-ink line that exceeds in distance the control circuit's presently understood/processed location for the writing tip 302 on the scribing surface 204 (which understanding will typically lag by at least a few milliseconds the actual physical location of the writing tip 302). As a result, the rendered electronic-ink line will likely be closer to the writing tip 302 than might otherwise occur and thereby offer a more realistic experience to the user (i.e., an experience where the scribed line appears to closely track the moving writing tip both in time and in physical proximity).

FIG. 5 provides another illustrative example. In this example, as in the example of FIG. 4, the stylus 301 began at a first point 401 and is presently understood to be at a second point 403. And also as in the previous example, the user's palm began in the area denoted by reference numeral 402. Unlike the example of FIG. 4, however, in this example the user's palm moves via a different path 501 and is presently at the area denoted by reference numeral 502.

In this example, while a prediction mechanism that relies only on the movement history of the stylus 301 might again predict that the stylus 301 will simply continue with its immediately-previous trajectory, the control circuit 201 here can take into further account that upwardly-arcing movement of the user's palm. By one approach, this might mean predicting instead that the stylus 301 is about to now travel upwardly via a similar path 503.

With reference again to FIG. 1, as suggested above, the control circuit 201 can use 104 such a predicted future location of the stylus 301 on the scribing surface 204 to facilitate displaying a corresponding electronic-ink line. In one case, as explained above, this can comprise rendering a predicted electronic-ink line to aggressively anticipate where the stylus 301 seems to be heading in order to maintain closer proximity between the conclusion of that electronic-ink line and the writing tip 302 of the stylus 301. In another case, when the predicted future location of the stylus 301 seems less certain (as with the illustrative example provided above in FIG. 5), this can comprise rendering the electronic-ink line with less (or no) reliance upon the prediction result. In this case, a physical gap may occur momentarily between the conclusion of the rendered line and the writing tip 302, but the rendered line is also more likely to remain more consistently within a given short distance of the writing tip 302 instead of a larger gap developing by acting on a prediction that turns out to be quite inaccurate.

So configured, movement of a stylus can often be better predicted by taking into account either a present location of the user's hand and/or both a present location and recent tracked movement of the user's hand. In practice, and depending upon the application setting, this can comprise, for example, detecting a location of the user's palm (for example, on an active scribing surface) and using that location when predicting the movement the stylus.

These teachings are highly flexible in practice and will support a wide variety of ways by which the information regarding the location of the user's hand can influence the stylus movement/location prediction methodology. By one approach, for example, these teachings will readily accommodate the use of weighting to control (statically or dynamically as desired) the extent to which hand-based information influences the prediction result.

For example, predicting movement of the style can be done as a function of a weighted accounting of the past movement of the stylus and a weighted accounting of a sensed hand. By one approach, for example, the weighting (and hence relative influence) of the sensed hand can be temporarily increased when the user's hand moves. Similarly, that sensed-hand weighting can be dynamically reduced, if desired, over time as the user's hand remains stationary.

As a further example of the flexibility of these teachings, the control circuit 201 can change the foregoing weighting as a function of a present control circuit application state and/or a present type of user scribing activity. For example, empirical studies may show useful correlations between line trajectories and corresponding hand movements that nevertheless vary from one kind of application (such as a handwriting-recognition application) to another (such as a doodling application). In such a case these teachings will readily accommodate leveraging such information to influence and/or weight the corresponding use of sensed hand locations/movements.

These teachings are also highly scalable in practice and can be employed with a wide variety of differently-sized scribing surfaces as well as different kinds of stylus and hand-sensing technologies and methodologies. As noted, these teachings can also be readily employed to further improve and/or confirm the prediction capabilities of any of a wide variety of stylus-movement prediction techniques.

So configured, a user is more likely to see an electronic-ink line that more closely tracks the physical location of the writing tip of their stylus and that is less likely to exhibit a spurious excursion that is dramatically at odds with the actual writing tip of the stylus. This improved experience, in turn, can lead to a better and more intuitive use of a stylus as an input interface and increased user satisfaction.

The present disclosure may be embodied in other specific forms without departing from its essential characteristics. The described embodiments are to be considered in all respects only as illustrative and not restrictive. The scope of the disclosure is, therefore, indicated by the appended claims rather than by the foregoing description. All changes that come within the meaning and range of equivalency of the claims are to be embraced within their scope.

## Claims

1. An apparatus comprising:
a stylus sensor (203);
a hand sensor (205);
a control circuit (201) operably coupled to the stylus sensor and the hand sensor and configured to predict (103) movement of a stylus (301) as a function, at least in part, of the hand sensor.

2. The apparatus of claim 1 wherein the stylus sensor comprises a stylus sensor configured to actively interact with a stylus.

3. The apparatus of claim 1 wherein the control circuit is further configured to predict movement of the stylus as a further function of past movement of the stylus.

4. The apparatus of claim 3 wherein the control circuit is further configured to predict movement of the stylus as a function of a weighted accounting of the past movement of the stylus and a weighted accounting of a sensed hand.

5. The apparatus of claim 4 wherein the control circuit is further configured to change weighting of at least one of the weighted accounting of the past movement of the stylus and the weighted accounting of the sensed hand as a function of at least one of:
a present control circuit application state;
a present type of user scribing activity.

6. The apparatus of claim 1 wherein the control circuit is configured to predict movement of the stylus as a function, at least in part, of the hand sensor by, at least in part:
detecting a location of a palm;
using the location of the palm when predicting the movement of the stylus.

7. The apparatus of claim 6 wherein detecting the location of the palm comprises detecting the location of the palm on an active scribing surface (204).

8. The apparatus of claim 7 wherein the active scribing surface comprises, at least in part, a touch-sensitive display.

9. A method comprising:
by a control circuit (201):
tracking (101) locations of a stylus (301) on a scribing surface (204);
tracking (102) locations of a hand (303) on the scribing surface;
predicting (103) future locations of the stylus on the scribing surface as a function, at least in part, of a location of the hand on the scribing surface.

10. The method of claim 9 wherein tracking locations of a hand on the scribing surface comprises tracking locations of a palm on the scribing surface.

11. The method of claim 9 wherein predicting future locations of the stylus on the scribing surface as a function, at least in part, of the location of the hand on the scribing surface further comprises predicting future locations of the stylus on the scribing surface as a function, at least in part, of both the location of the hand on the scribing surface and past locations of the stylus on the scribing surface.

12. The method of claim 9 wherein predicting future locations of the stylus on the scribing surface as a function, at least in part, of both the location of the hand on the scribing surface and past locations of the stylus on the scribing surface comprises predicting future locations of the stylus on the scribing surface as a function, at least in part, of both a weighted accounting of the location of the hand on the scribing surface and a weighted accounting of the past locations of the stylus on the scribing surface.

13. The method of claim 9 further comprising:
using(104) a predicted future location of the stylus on the scribing surface to facilitate displaying a corresponding electronic ink line.

14. The method of claim 13 wherein displaying the corresponding electronic ink line comprises displaying the corresponding electronic ink line using the scribing surface.

## Amended claims

### Amended claims in accordance with Rule 137(2) EPC.

**1.** An apparatus comprising:
a stylus sensor (203) that senses the location of at least a portion of a stylus with respect to a scribing surface (204);
a hand sensor (205) that detects at least one portion of a user's hand with respect to the scribing surface;
a control circuit (201) operably coupled to the stylus sensor and the hand sensor and configured to predict (103) a likely direction of movement of a stylus (301) on the scribing surface as a function, at least in part, of the hand sensor.

**2.** The apparatus of claim 1 wherein the stylus sensor comprises a stylus sensor configured to actively interact with a stylus.

**3.** The apparatus of claim 1 wherein the control circuit is further configured to predict movement of the stylus as a further function of past movement of the stylus.

**4.** The apparatus of claim 3 wherein the control circuit is further configured to predict movement of the stylus as a function of a weighted accounting of the past movement of the stylus and a weighted accounting of a sensed hand.

**5.** The apparatus of claim 4 wherein the control circuit is further configured to change weighting of at least one of the weighted accounting of the past movement of the stylus and the weighted accounting of the sensed hand as a function of at least one of:
a present control circuit application state;
a present type of user scribing activity.

**6.** The apparatus of claim 1 wherein the control circuit is configured to predict movement of the stylus as a function, at least in part, of the hand sensor by, at least in part:
detecting a location of a palm;
using the location of the palm when predicting the movement of the stylus.

**7.** The apparatus of claim 6 wherein detecting the location of the palm comprises detecting the location of the palm on an active scribing surface (204).

**8.** The apparatus of claim 7 wherein the active scribing surface comprises, at least in part, a touch-sensitive display.

**9.** A method comprising:
by a control circuit (201):
tracking (101) locations of a stylus (301) on a scribing surface (204);
tracking (102) locations of a hand (303) on the scribing surface;
predicting (103) future locations of the stylus on the scribing surface as a function, at least in part, of a location of the hand on the scribing surface.

**10.** The method of claim 9 wherein tracking locations of a hand on the scribing surface comprises tracking locations of a palm on the scribing surface.

**11.** The method of claim 9 wherein predicting future locations of the stylus on the scribing surface as a function, at least in part, of the location of the hand on the scribing surface further comprises predicting future locations of the stylus on the scribing surface as a function, at least in part, of both the location of the hand on the scribing surface and past locations of the stylus on the scribing surface.

**12.** The method of claim 9 wherein predicting future locations of the stylus on the scribing surface as a function, at least in part, of both the location of the hand on the scribing surface and past locations of the stylus on the scribing surface comprises predicting future locations of the stylus on the scribing surface as a function, at least in part, of both a weighted accounting of the location of the hand on the scribing surface and a weighted accounting of the past locations of the stylus on the scribing surface.

**13.** The method of claim 9 further comprising:
using(104) a predicted future location of the stylus on the scribing surface to facilitate displaying a corresponding electronic ink line.

**14.** The method of claim 13 wherein displaying the corresponding electronic ink line comprises displaying the corresponding electronic ink line using the scribing surface.
